# EUROPEAN PATENT APPLICATION

(11) **EP 1 666 323 A1**
(43) Date of publication of application: **07.06.2006**
(21) Application number: 05292485.9
(22) Date of filing: 23.11.2005
(51) Int. Cl.: B60T 8/36, B60T 8/42, F16D 65/14

(54) **Electronic control brake system with piezoelectric actuator**

(30) Priority: 23.11.2004 KR 2004096435
(71) Applicant: Mando Corporation, Seoul 135-739 (KR)
(72) Inventor: Song, Joon Kyu 1102-504 Mujigaemaeul Kumkang APT, Gyeonggi-do 463-700 (KR)
(74) Representative: Intes, Didier Gérard André

(57) **Abstract**

The present invention relates to an electronic control brake system. The present invention is directed to an electronic control brake system in which an oil pressure created in a master cylinder (1) is transferred to a wheel brake to apply a braking force thereto in response to the pedal depression or control of an electronic control unit. The electronic control brake system comprises a normal open solenoid valve (30) for selectively switching on or off the oil pressure created in the master cylinder (1), and a piezoelectric actuator (40) for regulating a magnitude of the oil pressure applied to the wheel brake through the solenoid valve (30). Thus, the electronic control brake system of the present invention can have a simplified structure enough to be easily manufactured, have a compact shape and perform the creation/removal of oil pressure in the wheel brake and the resultant precise braking force control only by adjusting the amount of electricity to be supplied thereto. Therefore, since a variety of functions ABS, TCS, ESP, EHB and EPB in which a precise braking control is required can be performed without additional components, there is an advantage in that the present invention has excellent applicability.

## Description

### BACKGROUND OF THE INVENTION

### 1. Field of Invention

The present invention relates to an electronic control brake system, and more particularly, to an electronic control brake system equipped with a piezoelectric actuator wherein conventional hydraulic valves, check valves and low pressure accumulators are replaced with a single piezoelectric actuator operating by the expansion/contraction of a piezoelectric element such that volume and weight of a brake system can be reduced, the operating response and accuracy of the brake system can be improved, and a variety of vehicle braking controls can be performed without any additional components.

### 2. Description of the Prior Art

In general, a vehicle is equipped with a booster, master cylinder and the like for transferring a braking pressure created by a brake pedal action to a wheel brake side, which are used to reduce the vehicle speed or to maintain a stationary state. However, such a general vehicle may be often subjected to a slip phenomenon that the vehicle slips depending on the braking pressure or road conditions during its braking operation.

To solve the aforementioned problem, an electronic control brake system has been recently developed, including an anti-lock brake system (ABS) for electronically controlling a braking pressure of a wheel brake to prevent the slip phenomenon, a traction control system (TCS) used in combination with the ABS for preventing excessive slip from occurring in driving wheels when a vehicle suddenly starts or accelerates, and the like.

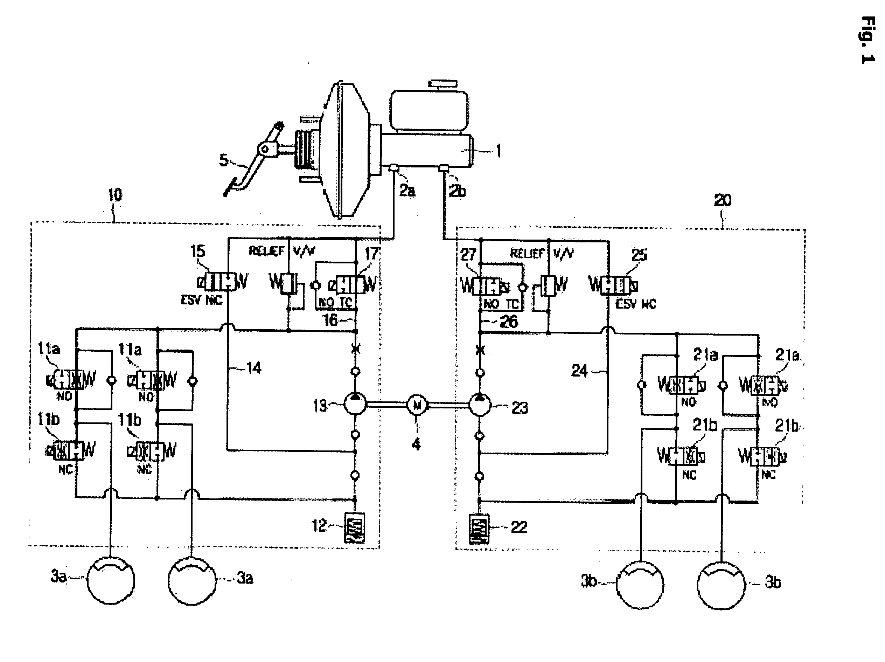

Fig. 1 is a schematic view of a related art electronic control brake system.

As shown in this figure, a related art brake traction control system comprises a first hydraulic circuit 10 connected with a first port 2a of a master cylinder 1, and a second hydraulic circuit 20 connected with a second port 2b of the master cylinder 1. At this time, the first and second hydraulic circuits 10 and 20 are constructed to be symmetrical with each other and connected to two brakes 3a and 3b, respectively.

That is, each of the hydraulic circuits 10 and 20 comprises a plurality of solenoid valves 11 a, 11b or 21 a, 21 b for controlling the braking oil pressure transferred to wheel brakes 3a or 3b; a low pressure accumulator 12 or 22 for temporarily storing oil escaping from the wheel brakes 3a or 3b upon the ABS pressure decrease mode; a pump 13 or 23 for sucking oil from the low pressure accumulator 12 or 22 and then discharging the sucked oil; an oil suction passage 14 or 24 for connecting the port 2a or 2b of the master cylinder 1 with an inlet of the pump 13 or 23; a normal close electric shuttle valve 15 or 25 installed on the middle of the oil suction passage 14 or 24 to open/close the oil suction passage; a traction control valve 17 or 27 installed in the middle of a main passage 16 or 26, which connects the port 2a or 2b of the master cylinder 1 with an outlet of the pump 13 or 23, to open/close the main passage; and an electronic control unit (ECU; not shown) for controlling electric components.

The solenoid valves are controlled by the ECU and divided into a normal open solenoid valve 11a or 21a installed upstream of the wheel brakes 3a or 3b and a normal close solenoid valve 11b or 21 b installed downstream of the wheel brakes.

That is, each of the ECUs detects the vehicle speed and controls the open/close operation of the respective solenoid valves 11a, 11b or 21 a, 21 b in accordance with the detected vehicle speed.

The low pressure accumulator 12 or 22 is independently provided to cooperate with the normal close solenoid valve 11b or 21 b such that the oil escaping from the wheel brakes 3a or 3b can be temporarily stored therein upon the ABS pressure decrease mode.

The plurality of solenoid valves 11a, 11b or 21a, 21b, the pump 13 or 23, the normal close electric shuttle valve 15 or 25, the low pressure accumulator 12 or 22, and the like are installed in a compact manner within a box-shaped hydraulic block (not shown) made of an aluminum material.

The related art electronic control brake system so configured will be operated in the following manner.

When a slip phenomenon occurs in a vehicle equipped with an electronic control brake system is braked, three control modes including pressure decrease mode, pressure increase mode and holding mode are properly combined in response to signals input from respective wheel sensors (not shown) to perform the ABS operation. The respective control modes are not identically applied to all the four wheels but can be independently applied thereto depending on the road conditions and ABS control conditions, whereby the three control modes may occur simultaneously. Now, the respective control modes will be explained step by step with reference to the first hydraulic circuit 10. If a braking pressure at the side of the wheel brake 3a cooperating with the first hydraulic circuit 10 in a state where the braking force is exerted thereon by means of an oil pressure generated from the master cylinder 1 by depressing a brake pedal 5 is larger than that in the road conditions, it should be reduced to a suitable pressure. Therefore, the ECU enables the normal close solenoid valve 11b to be opened and thus the ABS pressure decrease mode to be operated. As a result, since a portion of oil escapes from the wheel brake 3a and thus temporarily stored in the low pressure accumulator 12, the phenomenon that a vehicle slip on the road is prevented.

On the other hand, if the ABS pressure decrease mode lasts too long, a vehicle braking efficiency will be decreased. In such a case, the ECU enables the motor 4 to be driven in order to increase the oil pressure in the wheel brakes 3a and thus the ABS pressure increase mode to be performed by using the pressure of oil discharged from the first pump 13 of the first hydraulic circuit 10. As a result, the oil stored in the low pressure accumulator 12 is pressurized by the first pump 13 and then pumped into the wheel brakes 3a via the opened normal open solenoid valve 11a. Thus, the braking pressure will be increased.

At this time, oil discharged from the second pump 23 of the second hydraulic circuit 20 is returned to the master cylinder 1 or transferred to the wheel brakes 3b cooperating with the second hydraulic circuit 20 depending on braking pressure conditions.

Further, the ABS pressure holding mode in which the braking pressure is kept at a constant state is required to prevent the resonance phenomenon or when the braking pressure is in a state where an optimal braking force is generated.

That is, the ABS pressure holding mode prevents the pressure change in the wheel brakes 3a. The ABS pressure holding mode can be stably performed by causing the normal open solenoid valve 11a of the first hydraulic circuit 10 to be closed to prevent the oil pressure to be transferred to the wheel brakes 3a and thus the oil discharged from the first pump 13 to be transferred to the master cylinder 1 via the traction control valve 17.

The TCS mode operation of the related art electronic control brake system occurring when a vehicle suddenly starts will be now explained.

When a driver deeply depresses an accelerator pedal at a condition that the road is slippery, the aforementioned slip phenomenon often occurs and it is detected by the ECU through the wheel sensor. At this time, the TCS mode is performed in such a manner that the shuttle valve 15 or 25 in the oil suction passage 14 or 24 is opened while the traction control valve 17 or 27 in the main passage 16 or 26 is closed, and the pump 13 or 23 is then driven. That is, the oil in the master cylinder 1 is sucked into the inlet of the pump 13 or 23 through the oil suction passage 14 or 24, and the oil discharged from the outlet of the pump 13 or 23 is then transferred to the wheel brakes 3a or 3b via the main passage 16 or 26 and the opened normal open solenoid valve 11a or 21a such that it can function as a braking pressure.

As such, even though the driver does not depress the brake pedal 5 when a vehicle suddenly starts due to sudden depression of the accelerator pedal by the user, a certain lock is imposed on the wheel brakes. Therefore, the vehicle will start slowly and stably even when the slip phenomenon may occur due to bad road conditions.

In order to achieve such a braking system, however, the normal open and close solenoid valves should be basically installed to respective wheels. Therefore, the manufacturing and assembling process is complicated due to the increase in the number of components, and thus, the installation efficiency is also deteriorated due to the increase in the volume and weight of the hydraulic unit. Further, since the oil pressure is controlled based on the force obtained when the driver depresses the brake pedal, such a process that the oil is transferred from the master cylinder to the wheel brakes via the plurality of solenoid valves cannot achieve accurate and quick supply of the oil pressure. Therefore, a response rate of the brake system is lowered and the operating characteristics are consequently deteriorated. In order to solve the above problems, an electric motor may be further installed to drive the solenoid valves using a motor as in the case of an electro-hydraulic brake (EHB). This incurs additional costs and increases the difficulty in performing the relevant process. Accordingly, there are additional problems in that it is difficult to achieve various and effective functions of the brake system.

### SUMMARY OF THE INVENTION

Accordingly, the present invention is conceived to solve the aforementioned problems in the prior art. An object of the present invention is to provide an electronic control brake system wherein the volume and weight thereof can be reduced, the operating response and accuracy thereof can also be improved, and various controls for the vehicle brake system such as an anti-lock brake system (ABS), a traction control system (TCS), an electronic stability program (ESP), an electro-hydraulic brake system (EHB) and an electronic parking brake system (EPB) can be performed without any additional components or devices.

According to an aspect of the present invention for achieving the object, there is provided an electronic control brake system in which an oil pressure created in a master cylinder is transferred to a wheel brake to apply a braking force thereto in response to pedal depression or control of an electronic control unit. The electronic control brake system comprises a normal open solenoid valve for selectively switching on or off the oil pressure created in the master cylinder, and a piezoelectric actuator for regulating a magnitude of the oil pressure applied to the wheel brake through the solenoid valve.

### BRIEF DESCRIPTION OF THE DRAWINGS

The above and other objects, features and advantages of the present invention will become apparent from the following description of a preferred embodiment given in conjunction with the accompanying drawings, in which:
Fig. 1 is a schematic view of a related art electronic control brake system; and
Fig. 2 is a schematic view illustrating an electronic control brake system equipped with a piezoelectric actuator according to the present invention.

### DETAILED DESCRIPTION OF THE PREFERRED EMBODIMENT

Hereinafter, a most preferred embodiment of the present invention will be described in detail with reference to the accompanying drawings such that the present invention can be easily implemented by those skilled in the art.

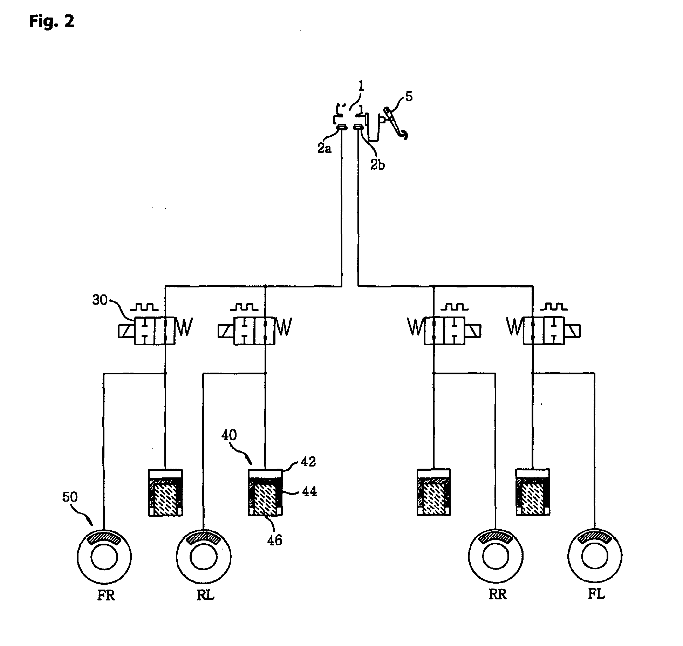

Same components as those described in Fig. 1 will be designated in Fig. 2 by same reference numerals, and the descriptions thereof will be omitted herein.

Fig. 2 is schematic view illustrating an electronic control brake system equipped with a piezoelectric actuator according to the present invention.

As shown in this figure, the present invention generally comprises a master cylinder 1 for creating an oil pressure, normal open solenoid valves 30 for selectively switching on or off the oil pressure supplied from the master cylinder 1, and piezoelectric actuators 40 for regulating the oil pressure from the normal open solenoid valves 30 and transferring the regulated oil pressure to wheel brakes 50.

The master cylinder 1 is mounted with a pedal 5 and creates the oil pressure in proportion to a depression force applied to the pedal by a driver such that the oil pressure regulated by an electronic control unit (not shown) can be discharged therefrom.

The oil pressure is transferred from ports 2a and 2b to the wheel brakes 50 via a series of hydraulic circuits. Each of the hydraulic circuits includes the normal open solenoid valves 30, the piezoelectric actuators 40 connected in parallel with the valves, and the wheel brakes 50 cooperating with the piezoelectric actuators 40.

The master cylinder 1, the normal open solenoid valves 30 and the piezoelectric actuators 40 are controlled by the electronic control unit (ECU). The normal open solenoid valve 30 selectively switches on or off the oil pressure, and the piezoelectric actuator 40 is installed between the normal open solenoid valve 30 and the wheel brake 50 such that the oil pressure from the normal open solenoid valve 30 can be regulated depending on driving conditions and then transferred to the wheel brake 50.

The piezoelectric actuator 40 is composed of a hollow cylinder 42, a piston 44 which is slidably brought into contact with an inner circumferential surface of the hollow cylinder 42 to move upward and downward, and an piezoelectric element 46 which is disposed at a bottom side of the piston 44 and expanded/contracted according to an input amount of electricity to cause the piston 44 to move upward and downward.

The operation of the electronic control brake system so configured will be performed in the following manner.

If it is determined that the ECU requires the braking control after the driver has depressed the pedal 5 or a sensor (not shown) for detecting a vehicle driving state has monitored the vehicle driving state such as sudden start, sudden stop, slip or skid, a high-pressure oil in the master cylinder 1 passes through the opened normal open solenoid valve 30 and is transferred to the wheel brake 50 and piezoelectric actuator 40 which are connected in parallel with each other with respect to the normal open solenoid valve 30.

If a sufficient oil pressure is created in the wheel brake 50 and the piezoelectric actuator 40, the normal open solenoid valve 30 is closed to prevent oil from escaping from the wheel brake 50 or piezoelectric actuator 40 and to thereby prevent the oil pressure from being decreased.

A case where the oil pressure with regulated magnitude is intermittently supplied such that a braking force is applied several times at a short period of time as in the case of the ABS or TCS will be discussed. If electricity is supplied to the piezoelectric element 46 according to the control of the ECU, the piezoelectric element 46 is expanded to allow the piston 44 supported thereon to move upward. Thus, the working fluid in the cylinder 42 is pressurized to create a certain oil pressure. Further, since the normal open solenoid valve has been closed, the created oil pressure is completely transferred to the wheel brake 50 such that a predetermined braking force is created in the wheel brake 50 due to the transferred oil pressure.

The piezoelectric element 46 is expanded in proportion to the supply amount of electricity. Thus, if the supply amount of electricity is decreased, the piezoelectric element 46 is contracted to allow the piston 44 supported thereon to move downward. As a result, a cavity defmed within the cylinder 42 is increased and internal pressure is decreased, so that the working fluid can be introduced into the cavity. Accordingly, the internal pressure created by the high-pressure oil introduced into the wheel brake 50 is cancelled out by the decreased internal pressure in the piezoelectric actuator 40.

Since the piezoelectric element 46 exhibits an accurate expansion/contraction degree with respect to the amount of electricity to be supplied thereto, a precise expansion/contraction amount of the piezoelectric element 46 can be induced by controlling the supply amount of electricity. Therefore, since the magnitude of oil pressure created by the expansion or contraction of the piezoelectric element 46 can also be adjusted, the braking operation occurring in the wheel brake 50 can be precisely controlled.

When all the braking operations have been finished, the normal open solenoid valve is opened to allow the high-pressure oil to be returned to the master cylinder 1, so that the oil pressure exerted on the wheel brake 50 is removed.

According to the preferred embodiment of the present invention as described above, since the wheel brake 50 is controlled by means of the oil pressure created by the expansion/contraction adjusted in accordance with the supply amount of electricity, a simplified structure in which essential components of the conventional electronic control brake system such as pumps, motors, low pressure accumulators, check valves and hydraulic valves are reduced or excluded can be achieved and the braking force of the wheel brakes can also be precisely controlled.

As described above, the electronic control brake system of the present invention can have a simplified structure enough to be easily manufactured, have a compact shape and perform the creation/removal of oil pressure in the wheel brake and the resultant precise braking force control only by adjusting the amount of electricity to be supplied thereto. Therefore, since a variety of functions ABS, TCS, ESP, EHB and EPB in which a precise braking control is required can be performed without additional components, there is an advantage in that the applicability thereof is very superior.

The foregoing is to illustrate a mere example of implementing the electronic control brake system according to the present invention. Therefore, the present invention is not limited thereto. It will be apparent to those skilled in the art that various modifications or changes can be made thereto within the scope of the fundamental technical spirit of the present invention. The true scope of the present invention should be construed on the basis of the appended claims.

## Claims

1. An electronic control brake system in which an oil pressure created in a master cylinder (1) is transferred to a wheel brake to apply a braking force thereto in response to pedal depression or control of an electronic control unit, said system being **characterized in that** it comprises :
a normal open solenoid valve (30) for selectively switching on or off the oil pressure created in the master cylinder (1); and
a piezoelectric actuator (40) for regulating a magnitude of the oil pressure applied to the wheel brake through the solenoid valve (30).

2. The electronic control brake system as claimed in claim 1, **characterized in that** the piezoelectric actuator (40) comprises:
a hollow cylinder (42) connected to the normal open solenoid valve (40);
a piezoelectric element (46) expanded or contracted as electricity is intermittently supplied thereto selectively according to a control of the electronic control unit; and
a piston (44) moving upward and downward due to the expansion/contraction of the piezoelectric actuator (40) to exert or remove the oil pressure on or from the interior of the cylinder (42).
